# EUROPEAN PATENT APPLICATION

(11) **EP 4 258 188 A1**
(43) Date of publication of application: **11.10.2023**
(21) Application number: 22167175.3
(22) Date of filing: 07.04.2022
(51) Int. Cl.: G06Q 10/02, G06Q 50/30, G06Q 50/28

(54) **METHOD, SYSTEM AND VEHICLE FOR PROVIDING SERVICE TO A VEHICLE OPERATOR**

(71) Applicant: VOLVO TRUCK CORPORATION, 405 08 Göteborg (SE)
(72) Inventor: BASSO, Rafael, 415 28 Göteborg (SE); PIHL, Claes, 433 75 Jonsered (SE); GUO, Qi, 412 63 Göteborg (SE)
(74) Representative: Zacco Sweden AB

(57) **Abstract**

A method (100), system and vehicle for providing service to a vehicle operator are provided. The method (100) comprises; determining (101) a starting destination (10), a target destination (20) and a route (15) there between for a host vehicle (H). Determining (102) available service providers (A, B, C, D, E, F) along the route (15). Initiating (103) at least one service order based on specific host vehicle information or host vehicle operator information to at least one service provider (A, B, C, D, E, F) along the route (15) and providing (104) confirmation status of the at least one initiated service order to a user interface.

## Description

### TECHNICAL FIELD

Embodiments herein relate to a method for providing service to a vehicle operator. Embodiments herein further relate to a vehicle operator service system and a vehicle comprising such system.

### BACKGROUND

Vehicle operators today, for example truck drivers, may need to handle a variety of tasks before, during and after transportation of goods from one destination to another. For example, a route between the destinations needs to be established with due care to rules and regulations relating to type of goods, weight of goods and/or dimensions of the goods. During longer transportation routes the vehicle driver or drivers need to take breaks at certain intervals for resting and eating. The vehicle may need to stop at gas stations during the route, and if the vehicle comprises batteries, they might need to be charged one or more times along the route. Charging batteries of a fully electric vehicle or hybrid electric vehicle takes time, wherefore transportation time may increase. The vehicle operator may also have personal preferences on where to stop, where to eat, where to rest etc.

Along the driving route some appointments or scheduling of tasks may also need to be performed. If the route includes one or more sections where it is necessary or preferable to take a ferry, tickets may have to be booked in advance. If the host vehicle arrives later to the ferry than planned, the tickets may need to be cancelled and new tickets need to be booked for a later ferry. Some routes may involve crossing a country border where the vehicle driver needs to interact with customs officers and/or to fill in various kinds of documents. During other routes the host vehicle may need to stop at terminals along the routes for picking up or leaving goods or for changing driver.

Thus, transportation of goods today may require a lot of administration which may be stressful and time consuming for the driver. Accordingly, there remains a need for improvements in the field of providing service to vehicle operators.

### SUMMARY

Embodiments herein aim to provide a method for providing service to a vehicle operator eliminating or at least reducing the problems and/or drawbacks associated with prior art solutions.

According to an embodiment, this is provided by a method for providing service to a vehicle operator, wherein the method comprises;
- determining a starting destination, a target destination and a route there between for a host vehicle,
- determining available service providers along the route,
- initiating at least one service order based on specific host vehicle information or host vehicle operator information to at least one service provider along the route,
- providing confirmation status of the at least one initiated service order to a user interface.

Since the service order is initiated based on specific host vehicle information or host vehicle operator information, the vehicle operator can be relieved from the task, e.g. during driving of the host vehicle, when the vehicle operator more suitably should focus on driving/operating the vehicle. The method may be performed by vehicle operator service system as described below, by real-time input from the vehicle operator or another person, or by earlier input from the vehicle operator or another person.

Thus, hereby is provided a method for providing service to a vehicle operator, eliminating or at least reducing the problems and/or drawbacks associated with prior art solutions. This method or service, which may be referred to as an automatic or semi-automatic concierge service allows the vehicle operator to focus on driving, and relieves him/her from unnecessary administration. Both payments and receipts may be handled automatically in the system, and all transactions for a specific month may e.g.be provided to the fleet owner to which the host vehicle belongs on the last day of the month.

According to some embodiments the specific host vehicle information comprises estimated arrival time for the host vehicle to the selected service provider and/or estimated departure time for the host vehicle from the selected service provider. Hereby an electrical charger or a restaurant reservation (e.g. a table at a restaurant) may be scheduled and booked from the estimated arrival time and a pre-determined time slot, such as 30-60 minutes or the time slot between estimated arrival and departure. The selected service provider is thus the service provider to which a service order has been initiated.

According to some embodiments the specific host vehicle information comprises information related to host vehicle energy supply need upon arrival to the service provider. Hereby an electrical charger may be booked for a sufficient time duration. If the batteries of the host vehicle have a state of charge (SoC) of 25% upon arrival at the charging station, and a SoC of 70% is necessary to reach the target destination, a charging time duration sufficient for increasing the SoC from 25% to 70% can be booked. If the batteries of the host vehicle have a state of charge (SoC) of 40% upon arrival at the charging station, and a SoC of 70% is necessary to reach the target destination, a shorter charging time duration, sufficient for increasing the SoC from 40% to 70%, can be booked.

According to some embodiments the service order comprises a request for electric charging of the host vehicle during a time duration which starts upon arrival to the service provider and ends upon departure from the service provider. Hereby maximum charging is enabled, given a pre-determined time duration for the stop.

According to some embodiments the service order comprises a restaurant table reservation to a service provider in the form of a restaurant. Both a physical table reservation can be booked, and also pre-selected dishes. Alternatively dishes are suggested based on selections during earlier trips, preferred cuisines, diets or similar.

According to some embodiments the service order comprises information on selected food and/or drink items, previously selected by the vehicle operator. The system according to embodiments described herein can be configured to, via suitable APIs (application programming interfaces), request menus from restaurants along the upcoming route, such that the vehicle operator may provide his/her preferences prior to departure.

According to some embodiments the service order comprises a ferry booking for a host vehicle ferry ride along at least a part of the route between the starting destination and the target destination. The system according to embodiments described herein can be configured to, via suitable APIs, request departure times for a ferry line along the upcoming route, and suggest to book a ticket to a ferry departure which fits the estimated time of arrival to the ferry terminal.

According to some embodiments the method comprises;
- updating the service order with a new estimated arrival time for the host vehicle to the service provider in response to a changed estimated or determined arrival time.

Hereby real-time information, or near real-time information, may be taken into account. For example, a previous service order with a table booking request for 11:30 has been confirmed by the restaurant based on an estimation that the host vehicle will arrive between 11:20-11:30. Due to a traffic jam the arrival time of the host vehicle at the service provider/restaurant is delayed and a new arrival time has been estimated to be 12:10. Then the service order is automatically updated with this information whereby the booking is re-scheduled to 12:10.

As an alternative example, a service order may be to a delivery terminal for a support person or team to be available at an estimated arrival time e.g. 11.30, for example for providing assistance in loading/unloading a vehicle, assistance on the specific goods to be unloaded from a vehicle and where to position these goods in a warehouse, administrative assistance to ensure documents to be signed are ready at the correct time, or the like. Due to unforeseen circumstances, such as a traffic jam, closed road, traffic accident, or the like, the arrival time is delayed and a new arrival time is estimated as 12.10. The service order is then automatically updated with this information whereby the booking is rescheduled to 12.10, thereby ensuring that the support person or team is ready and available at the correct time. This may therefore benefit the driver both the driver and the support person or team by ensuring that no or minimal time is wasted upon arrival waiting for a support person or support team who may have moved to a different location or task seeing that the original arrival time has been missed.

Similarly, where a driver is required to make a service order for a transport connection, such as boarding/driving onto a ferry or other alternative transport means such as a train, support personnel at the location of the transport connection may be alerted to an updated arrival time, and may therefore be able to do delay departure of the ferry etc., or may be able to reschedule the connection with a different ferry or alternative transport means that is scheduled to depart at a time that more closely aligns with the new rescheduled arrival time of the driver.

According to some embodiments the method comprises;
- providing confirmation status of the at least one updated service order to the user interface.

Accordingly confirmation on the updated booking may be sent from the restaurant to the host vehicle and provided to the vehicle operator such that he/she can rest assured that a table is ready upon arrival, possibly with a portion of his/her selected Spaghetti Bolognese already being prepared in the kitchen, or even a more complex order comprising multiple courses and/or made with ingredients that are tailored towards the driver's specific tastes, desires or dietary requirements.

Thus, hereby is provided a method for providing service to a vehicle operator, eliminating or at least reducing the problems and/or drawbacks associated with prior art solutions.

Embodiments herein also aim to provide a vehicle operator service system without the problems or drawbacks described above.

According to some embodiments, this is provided by a vehicle operator service system, comprising a processing unit, a navigation system, a communication system and a user interface, wherein;
- the navigation system is arranged to determine a driving route between a host vehicle starting destination and a host vehicle target destination, and arranged to determine available service providers along the route,
- the processing unit is arranged to, in response to input related to specific host vehicle information or host vehicle operator information provided via the user interface, via the communication system initiate at least one service order to at least one service provider along the route, and further
- arranged to provide a confirmation status of the at least one initiated service order via the user interface.

Since the service order is initiated based on specific host vehicle information or host vehicle operator information, the vehicle operator can be relieved from the task, e.g. during driving of the host vehicle, when the vehicle operator more suitably should focus on driving/operating the vehicle. Further, all features and advantages mentioned for the method above may be achieved by the vehicle operator service system. Thus, the system can perform all method steps.

According to some embodiments the system is arranged to update the service order with a new estimated arrival time for the host vehicle to the service provider in response to a changed estimated or determined arrival time. Hereby real-time information, or near real-time information, may be taken into account. For example, a previous service order with a table booking request for 11:30 has been confirmed by the restaurant based on an estimation that the host vehicle will arrive between 11:20-11:30. Due to a traffic jam the arrival time of the host vehicle at the service provider/the restaurant is delayed and a new arrival time has been estimated to be 12:10. Then the service order is automatically updated with this information whereby the booking is re-scheduled to 12:10.

The system may be arranged to continuously, or repeatedly, update the service order. Hereby a ferry company may be able to receive information on late or delayed arrival of the host vehicle such that the ferry company has the possibility to delay departure (if the host vehicle is very close) or re-schedule the host vehicle on the next ferry instead.

Embodiments herein also aim to provide a vehicle without the problems or drawbacks described above. According to some embodiments, this is provided by a vehicle, wherein the vehicle comprises a vehicle operator service system according to embodiments described herein. Thus, hereby is provided a vehicle operator service system and a vehicle, eliminating or at least reducing the problems and/or drawbacks associated with prior art solutions.

Further features of, and advantages of, the embodiments herein will become apparent when studying the appended claims and the following detailed description. Those skilled in the art will realise that different features of the embodiments herein may be combined to create embodiments other than those described in the following, without departing from the scope of the appended claims.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a method for providing service to a vehicle operator,
Fig. 2 illustrates a host vehicle on a driving route according to some embodiments,
Fig. 3 illustrates a host vehicle and a vehicle operator service system according to some embodiments,
Fig. 4 illustrates a display with a user interface according to some embodiments,
Fig. 5 illustrates a display with a user interface according to some further embodiments, and
Fig. 6 illustrates a display with a user interface according to yet some further embodiments.

### DETAILED DESCRIPTION

Embodiments herein will now be described more fully with reference to the accompanying drawings, in which some embodiments are shown. However, this application should not be construed as limited to the embodiments set forth herein. Disclosed features of example embodiments may be combined as readily understood by one of ordinary skill in the art to which this application belongs. Like numbers refer to like elements throughout. Well-known functions or constructions will not necessarily be described in detail for brevity and/or clarity.

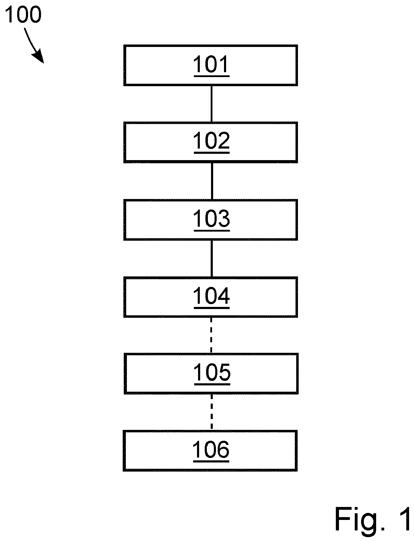

Fig. 1 illustrates a method 100 for providing service to a vehicle operator. The vehicle operator may be the driver of any vehicle, such as a passenger car, a truck, long haul truck, delivery truck, a hybrid electric truck, a fully electric truck or similar. In the embodiments described herein the vehicle is referred to as a host vehicle, indicating that the vehicle may host the systems and features described.

The vehicle may be arranged for manual driving, for driving with some assistance systems, for semi-autonomous driving or for fully autonomous driving.

The method 100 illustrated in Fig. 1 comprises determining 101 a starting destination. This may e.g. be the current position of the vehicle, or another starting point, such as a terminal or a pick-up place for goods. Also a target destination is determined or selected (e.g. determined or selected by a user, a vehicle operator, a central controller or operator, or the like). This may be another terminal, where goods should be delivered. A user or vehicle operator may select target destination by entering alphanumeric information via a user interface (Ul), by selecting the target destination on a digital map, by using voice commands or similar. The target destination may alternatively be generated or suggested by a processing unit, artificial intelligence or similar, e.g. based on previous target destinations, data associated with the goods to be transported or similar. The method 100 may also comprise determining a driving route between the starting destination and the target destination. The route may be generated with use of e.g. a navigation system, a map database, real-time traffic and congestion information and similar functions. The route may be optimally generated based on a desired optimised parameter. For example, the route may be generated based on a route having the shortest travel distance, the shortest travel time, the lowest predicted fuel consumption, lowest predicted traffic volume (which may be calculated based on, for example travel time, travel distance, likelihood of traffic, or the like), least variation in elevation en route, or the like.

The method 100 illustrated in Fig. 1 comprises determining 102 available service providers A, B, C, D, E, F... along the driving route. The service providers may be located at the determined route or at a small distance from the driving route e.g. within a specified distance from the driving route. The specified distance may be present by a vehicle operator, or may be present in a host vehicle. The specified distance may be measured in kilometres, miles, or the like, or may be a measure of the expected time taken to reach the service provider. For example, a vehicle operator may be able to select service providers that are less than a 5 minute drive from the driving route, or require a detour of less than 5 minutes from the driving route, or require less than 5km of driving to reach from the driving route. It should be noted that other specified distance values may be used, such as 10 minutes, 12 minutes, 15 minutes, 2km, 8km, 10km or the like. Due care to available service providers, such as gas stations or electrical charging stations, may be taken during determination of the route.

A service provider may be a provider of any type of services or products which may be of interest for the vehicle operator. It may for example be an electrical charger or charging station, a battery replacement location, a fuel station, a gas station, an LNG-station, a restaurant, a cafe, a rest place, a hotel or hostel, a medical care centre, a workshop or repair station.

The method 100 comprises initiating 103 at least one service order based on specific host vehicle information or host vehicle operator information to at least one service provider along the route.

A service order to a restaurant or cafe may for example comprise a table reservation, ordering a take-away meal, ordering a meal to be consumed at the restaurant or cafe, order of beverage such as coffee. The service order may be directed to a "general" meal or beverage, such as "today's meal", a random meal on a menu associated with the service provider, a specific and preselected (e.g. preselected by the service provider) meal which may be associated with a specific user or vehicle operator, e.g. with vehicle operators using the vehicle operator service system, with vehicle operators having a specific employer or one of a selection of employers, with vehicle operators using a specific or one of a selection of vehicles, or the like for example which may be offered at a discounted rate to users of the vehicle operator service system. It may be a specified dish or meal, selected by the driver operator or suggested to him/her based on previous orders. The service order may be based on previous information related to a specific driver operator preferences, diets, allergies, favourite dishes or similar.

A service order to an electrical charger at a charging station may for example comprise a request for a desired charging time slot, or for a particular charger which may provide a certain charging output or similar.

The method 100 may comprise providing 104 confirmation status of the at least one initiated service order to a user interface. Thus, confirmation of an accepted or denied service order may be provided to the vehicle operator e.g. on a display associated with the host vehicle or on a display of a mobile phone associated with the host vehicle or vehicle operator. Confirmation of an accepted or denied service order may alternatively or in addition be provided via a voice message or any other suitable means of communication.

In some examples or embodiments the method 100 selectively comprises updating 105 the service order with a new estimated arrival time for the host vehicle to the service provider in response to a changed estimated or determined arrival time for the host vehicle to the service provider. The method 100 may also selectively comprise providing 106 confirmation status of the at least one updated service order to the user interface.

Thus, a service order indicative of a electrical charging station booking, initially scheduled with a duration between 15:00 and 15:40, may be manually or automatically updated with a new service order or request for the time slot 15:20-16:00 if it is determined or estimated that the estimated arrival time to the service provider is delayed from 15:00 to 15:20, e.g. due to traffic jam.

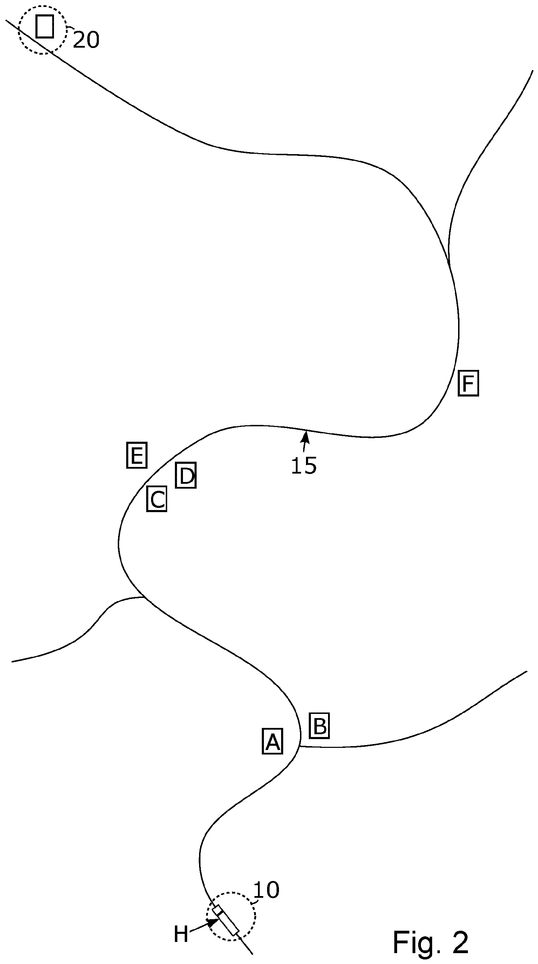

In Fig. 2 a schematic map which comprises a starting destination 10 for the host vehicle H, a target destination 20 and a selected or determined route 15 which leads from the starting destination 10 to the target destination 20 is illustrated. In Fig. 2 a number of service providers A, B, C, D, E and F are also illustrated. Fig. 2 illustrates a schematic example, and the number of service providers may of course be much larger, in particular if the route 15 is relatively long. The service providers may be categorised into groups, where one group includes electrical charging stations, another group gas stations, another group restaurants etc.

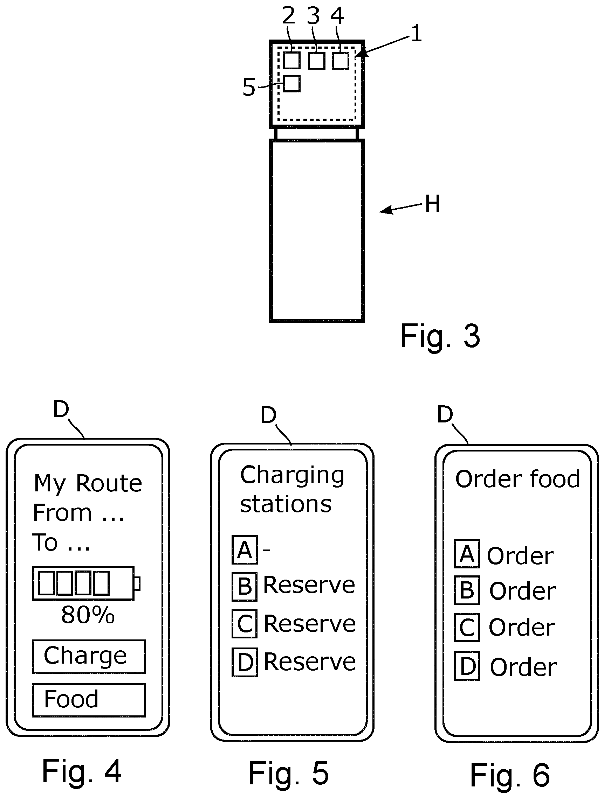

Fig. 3 illustrates a vehicle operator service system 1. The system 1 may be arranged within the schematically illustrated host vehicle H. The system 1 may alternatively or additionally be arranged, fully or in parts, on a remote server/the cloud, in a cellular or mobile device/phone/tablet or similar associated with the host vehicle, a fleet owner of the host vehicle, a vehicle operator or similar.

The vehicle operator service system 1 comprises one or more processing units 2. Such processing units 2 may comprise, or be connected to, one or more memory units. In some embodiments the one or more processing units 2 are used for processing in several different vehicle systems. Some processing units 2 may be dedicated to a specific processing task. In some embodiments the host vehicle H and/or the system 1 may comprise a large number of processing units 2. The one or more processing units 2 may be central processing units that carry out instructions of computer programs/software which when executed perform basic arithmetical, logical, and input/output operations. The system 1 may also comprise an accelerated processing unit, APU, also referred to as an advanced processing unit. An APU is a processing unit that includes additional processing capability designed to accelerate one or more types of computations outside of a CPU. One or more processing units 2 may comprise application programming interfaces, APIs, which specify how software components may interact with each other. The APIs may thus interact with APIs associated with the service providers herein. The API of the vehicle operator service system 1 may be configured to interact with an API of an associated service provider to enable the sending of data to the service provider API in the form of a message, which may be understandable by the service provider API and communicated to the service provider. The message may be generated from text input (e.g. by a driver) to the vehicle operator service system 1, and may be sent for example in an SMS or similar format, where a short delay between the sending of the message and receipt is acceptable. In some cases, pre-recorded voice and optionally video instructions may be provided to the vehicle operator service system API to be transmitted to the service provided API. In some examples, a direct connection between the vehicle operator service system API and the service provider API may be established to enable instantaneous (or near-instantaneous) transfer of data between APIs to permit synchronised voice and optionally video channels, to permit voice and optionally video instructions from one API to another. This may enable live interaction between the service provider API and that of the vehicle operator service system 1.

The system 1 may comprise or be connected to a navigation system 3 comprised in or associated with the host vehicle H, to which a user can input a preferred host vehicle route. The preferred host vehicle route may be, as previously described, optimised, for example based on minimum travel distance, time, etc.. In some examples, the preferred host vehicle route may run via a specific destination chosen by the host vehicle operator, for example a drop-off or pickup location, an office, a preferred service provider, or the like. The navigation system 3 can comprise a positioning arrangement, which may determine a host vehicle position and heading. The positioning system can determine the host vehicle position and driving direction e.g. via a satellite based global positioning system (GPS) or via map matching and a compass. The positioning system may be able to determine once a driver has reached a service provider or a final destination, and provide updates as appropriate, for example to a service provider that a driver has arrived, to a third party (e.g. a central controller or control team) that a journey is fully or partially complete.

The navigation system may be part of controls or functions of the host vehicle H or third party add-ons designed to find direction for the host vehicle. It typically uses or comprises a satellite navigation unit to receive or retrieve position data which is then correlated to a position on a map or road. When directions are needed routing can be calculated. Real time data, or near real time data related to traffic information, such as road closures or congestions can be used to adjust the route. Dead reckoning using distance data from sensors of the host vehicle, a gyroscope and an accelerometer can be used for greater reliability during signal loss and similar. The navigation and/or route determination may be based on the shortest path problem, within graph theory, which examines how to identify the path that best meets some criteria (shortest, cheapest, fastest, etc.) between two destinations in a large network.

The system 1 comprises a communication system 4. The communication system 4 may comprise a receiver that receives signals from at least one external source, such as communication arrangements associated with various kinds of service providers discussed herein. The receiver may also be configured to communicate with external sources in the form of infrastructure such as remote servers, databases, clouds and/or roadside units. The communication system 4 may also comprise a transmitter which converts real time host vehicle information, e.g. relating to host vehicle position, velocity, acceleration, braking, statuses, heading etc. into a signal, such as an electrical signal and/or a signal carried by electromagnetic waves. Hereby host vehicle information may be distributed to various kinds of service providers, other vehicles and/or infrastructure such as remote servers, databases, clouds and/or roadside units.

Any suitable means may be used for the communication between the system 1 and the service providers or other infrastructure, e.g. radio signals, such as according to either of standards, such as the GSM, 3G, 4G/LTE, 5G and/or WiFi standards, and/or satellite communication signals.

The system 1 may further comprise a user interface 5. The user interface 5 may be any kind of means through which the user may provide instructions to, or receive information from, the system 1 or any parts or subsystem associated with the system 1. It may for example be a display or touch-display, mounted or arranged within the host vehicle or a mobile phone or tablet which the vehicle operator has access to. The user interface may comprise a microphone through which the vehicle operator may give voice commands, and a loudspeaker for audio-information and confirmations.

The navigation system 3 is arranged to determine a driving route 15 (illustrated in Fig. 2) between a host vehicle starting destination 10 and a host vehicle target destination 20. It is also configured to determine or identify available service providers A, B, C, D, E, F along the route 15. The navigation system 3 may comprise information generated/uploaded from different entities, such as map providers and third parties, such as the service providers themselves, a database comprising service providers and their locations, e.g. located in cloud storage, or the like. Service providers may upload information via the maps/databases/navigation system, for example relating to their offers and opening hours. By way of example, google maps or TomTom may be used for at least part of the method steps or processes described herein.

The system 1, or the processing unit 2 thereof, is arranged to, in response to input related to specific host vehicle information or host vehicle operator information provided via the user interface 5, via the communication system 4 initiate at least one service order to at least one service provider A, B, C, D, E, F along the route 15. It is also arranged to provide a confirmation status of the at least one initiated service order to the vehicle operator via the user interface. The system 1 or the processing unit 2 may also, selectively, be arranged to update the service order with a new estimated arrival time for the host vehicle to the service provider in response to a changed estimated or determined arrival time.

In some examples, the communication system 4 may receive information from a service provider and communicate this information to a host vehicle operator or host vehicle via the user interface 5.

Fig. 4 illustrates an example of an interface which the vehicle operator may use for initiating or confirming a service order. On a display D he/she can see information about the upcoming journey/route, and possibly also other statuses, such as available driving range or state of charge. Groups or kinds of service providers may be available for selection, illustrated by the "Charge" and "Food" icons/buttons. If he/she selects "Charge", service providers along the route in the form of charging stations will be presented and available for selection, illustrated in Fig. 5. By clicking on a desired charging station, a request for a charging time slot is sent to the charging station. If accepted by the charging station, a confirmation is sent from the charging station to the system and shown on the display. If not accepted, a negative reply is provided to the system and shown to the user. The vehicle operator may then select an available alternative instead. Alternatively the system 1 itself suggest the best/optimal charging stations along the route, e.g. based on the distance to the charging stations and the current available range. Suggestions/bookings may also be based on price for charging, brand of the charging station or similar.

If he/she selects "Food", service providers along the route in form of restaurants, cafes, food shops and the like, will be presented and available for selection, as illustrated in Fig. 6. By clicking any of the available "Order"-icons he/she is directed to the selected service provider where he/she may order selected items of food/beverage and/or reserve a table. A positive or negative confirmation from the restaurant is received and displayed as confirmation.

Examples of how the method and system described herein may be carried out or used are given below.

Example 1: A route between a starting destination and a target destination has been determined for an electric vehicle (EV), such as an electric truck. Along the route a number of service providers are located, such as charging station A, restaurant B, cafe C, restaurant D, charging station E and charging station F (schematically illustrated in Fig. 2). Specific host vehicle information can be related to battery capacity and estimated driving range for the host vehicle given a current payload. Specific host vehicle information comprises information that may be related to host vehicle energy supply need upon arrival at the service provider. Specific host vehicle operator information can be related to that operator's preferences with respect to available restaurants, available food, dishes or the like. The service order may comprise information on selected food and/or drink items, previously selected by the vehicle operator. If charging station A and E, but not F, is within the available range on a specific journey, and charging station E is located next to restaurant D which the current operator prefers, it may be suggested to the operator that a stop should be made at charging station E/restaurant D. He/she may confirm the suggestion, whereby two service orders are sent. One first service order is sent with a request to the charging station E to book an electrical charger from the estimated/determined arrival at the charging station for e.g. 50 minutes, if 50 minutes of charging is sufficient for driving the rest of the journey, i.e. from the charging station E to the target destination 20. The service order may thus comprise a request for electric charging of the host vehicle during a time duration which starts upon arrival to the service provider and ends upon departure from the service provider.

One second service order with a request to book a table in the operator's name and prepare a meal is sent to restaurant D. The operator may earlier have provided information about preferred dishes, diets etc. The service orders may be sent and received via a processing unit and communication system with an API (application programming interface). If the service orders are accepted, i.e. if a table and an electrical charger are available upon estimated/determined arrival, an affirmative confirmation status is sent from communication means associated with the charging station E and restaurant D to the host vehicle or a system thereof. The confirmation status may be provided to the vehicle operator via a user interface, such as on a vehicle display, a mobile phone associated with the vehicle operator or via a voice message.

If no table is available, a negative confirmation status is sent from restaurant D and received by the host vehicle via the communication system. An alternative suggestion may then be provided the vehicle operator, such as a take-away order from the restaurant or another restaurant with available tables, e.g. cafe C.

Example 2: A route between a starting destination and a target destination has been determined for a long haul truck. Along the route a number of service providers are located, among them a ferry company with ferries that can transport the truck along a part or sub-section of the route. A ferry departs twice every hour, e.g. 10:00, 10:30, 11:00, 11:30 etc. It is estimated that the truck should arrive at the ferry terminal at 11:10 and a service request is automatically sent by the system 1 (or manually by the vehicle operator, using the system or methods herein) for a ticket with the 11:30 ferry.

The journey to the ferry terminal goes faster than estimated, and when the truck is relatively near the ferry terminal, it is determined or estimated that the new arrival time for the truck is 10:50. The system then suggests updating the service order by cancelling the ferry ticket for the ferry at 11:30 and ordering a new ticket for the ferry which departs at 11:00. If space for the truck is available to the 11:00 ferry, a confirmation is sent from the ferry terminal and received by the system 1, such as the information on the update is provided the vehicle operator.

Correspondingly, if the journey to the ferry terminal takes longer time than expected, and a new estimated arrival time is 11:40, the 11:30 ticket is cancelled and a new ticket for the 12:00 ferry is booked.

Alternatively, due to an unforeseen circumstance such as a heavy storm or technical difficulties, the ferry is delayed or may even be cancelled. The system is then able to provide a notification to the driver or the truck that the ferry has been delayed, and provide a new arrival time for the ferry, or that the ferry is cancelled, and automatically provide a booking on the next ferry, or provide an alternative suggestion if appropriate. This information may then be communicated to the driver who may be able to rearrange his or her plans to ensure that no, or a minimal amount of, time is wasted.

Example 3: A target destination in the form of a goods terminal is located far from the starting destination, and it is determined that the journey with a hybrid electric truck should start at 15:00 on a Monday. The system 1 may then send, or suggest to send, a service request with a room booking for Monday evening to a service provider in form of a hotel along the route. If the hotel confirms the booking this is shown to the vehicle operator via a display. If the vehicle operator earlier has given input that he/she has special preferences, such as to have breakfast included or a particular type of room, this may be included in the service order. If it is estimated that the driver will arrive at the hotel at 20:30, the service order may include a request for a table reservation upon arrival, i.e. 20:30, or a predetermined amount of time after arrival, e.g. 20:45. The service order may also include a request for an electrical charger for a time slot starting at 20:30 and ending when the batteries of the hybrid electric truck have been charged to a desired state of charge, e.g. to 80%, 90% or 100%.

The service order, e.g. relating to the table booking or the electric charger, may be automatically updated and confirmed several times, a large amount of times or continuously, if/when an expected time of arrival is changed. It may be seen as an agreement between the service provider and the system/vehicle operator that a particular service should be available upon arrival. If the system informs the service provider that the starting time (or any other factor in the agreement) is changed, the service provider confirms the updated agreement as long as it is still capable of providing the requested service. The information may be updated in both directions. If a booked electrical charger suddenly becomes unavailable for any reason, information about this is sent by the service provider and received by the system 1 such that the driver is informed before arrival at the charger.

Although the aspects has been described with reference to example embodiments, many different alterations, modifications and the like will become apparent for those skilled in the art. Therefore, it is to be understood that the foregoing is illustrative of various example embodiments and the scope of the appended claims is not to be limited to the specific embodiments disclosed and that modifications to the disclosed embodiments, combinations of features of disclosed embodiments as well as other embodiments are intended to be included within the scope of the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A method (100) for providing service to a vehicle operator, wherein the method (100) comprises;
- determining (101) a starting destination (10), a target destination (20) and a route (15) there between for a host vehicle (H),
- determining (102) available service providers (A, B, C, D, E, F) along the route (15),
- initiating (103) at least one service order based on specific host vehicle information or host vehicle operator information to at least one service provider (A, B, C, D, E, F) along the route (15),
- providing (104) confirmation status of the at least one initiated service order to a user interface.

2. The method (100) according to claim 1, wherein the specific host vehicle information comprises estimated arrival time for the host vehicle (H) at the selected service provider (A, B, C, D, E, F) and/or estimated departure time for the host vehicle from the selected service provider (A, B, C, D, E, F).

3. The method (100) according to claim 1 or 2, wherein the specific host vehicle information comprises information related to host vehicle energy supply need upon arrival at the service provider (A, B, C, D, E, F).

4. The method (100) according to claim 3, wherein the service order comprises a request for electric charging of the host vehicle (H) during a time duration (T) which starts upon arrival at the service provider (A, B, C, D, E, F) and ends upon departure from the service provider (A, B, C, D, E, F).

5. The method (100) according to any one of the preceding claims, wherein the service order comprises a restaurant table reservation to a service provider (A, B, C, D, E, F) in the form of a restaurant.

6. The method (100) according to claim 5, wherein the service order comprises information on selected food and/or drink items, previously selected by the vehicle operator.

7. The method (100) according to any one of the preceding claims, wherein the service order comprises a ferry booking for a host vehicle ferry ride along at least a part of the route between the starting destination (10) and the target destination (20).

8. The method (100) according to any one of the preceding claims, wherein it comprises;
- updating (105) the service order with a new estimated arrival time for the host vehicle (H) to the service provider (A, B, C, D, E, F) in response to a changed estimated or determined arrival time.

9. The method (100) according to claim 8 wherein it comprises;
- providing (106) confirmation status of the at least one updated service order to the user interface.

10. A vehicle operator service system (1), comprising a processing unit (2), a navigation system (3), a communication system (4) and a user interface (5), wherein;
- the navigation system (3) is arranged to determine a driving route (15) between a host vehicle starting destination (10) and a host vehicle target destination (20), and arranged to determine available service providers (A, B, C, D, E, F) along the route (15),
- the processing unit (2) is arranged to, in response to input related to specific host vehicle information or host vehicle operator information provided via the user interface (5), via the communication system (4) initiate at least one service order to at least one service provider (A, B, C, D, E, F) along the route (15), and further
- arranged to provide a confirmation status of the at least one initiated service order via the user interface (5).

11. The vehicle operator service system (1) according to claim 10, wherein the system (1) is arranged to update the service order with a new estimated arrival time for the host vehicle (H) to the service provider (A, B, C, D, E, F) in response to a changed estimated or determined arrival time.

12. A host vehicle (H), wherein the vehicle (H) comprises a vehicle operator service system (1) according to claim 10 or 11.
